# EUROPEAN PATENT APPLICATION

(11) **EP 1 243 232 A1**
(43) Date of publication of application: **25.09.2002**
(21) Application number: 01127720.9
(22) Date of filing: 21.11.2001
(51) Int. Cl.: A61C 13/235, A61C 8/00

(54) **Dental magnetic attachment**

(30) Priority: 22.03.2001 JP 2001083502
(71) Applicant: Aichi Steel Corporation, Tokai-shi, Aichi-Ken 476-8666 (JP)
(72) Inventor: Honkura, Yoshinobu, Tokai-shi, Aichi-ken 476-8666 (JP); Arai, Kazuo, Tokai-shi, Aichi-ken 476-8666 (JP)
(74) Representative: Blumbach, Kramer & Partner GbR

(57) **Abstract**

The present invention is of a dental magnetic attachment (vertically arranged north (N) and south (S) poles convex; non magnetic material (44) between the yoke plates (42,43)) with superior strength and anticorrosion characteristics that can accommodate moderate swinging or rotation during occlusion without the formation of a gap between the magnetic assembly and the keeper. Wear resistance of the attractive faces is enhanced by the surface treatment of the attractive faces with a layer of Al₂O₃, TiN, diamond or other substance.

## Description

### BACKGROUND OF THE INVENTION

### [Field of the art]

The present invention relates to a dental attachment that uses magnetic attractive force to fix a denture to the keeper of the fixing abutment, and can also be freely removed from the keeper.

### [Prior art]

Various dental attachments using magnetic attractive force have been proposed for dental treatment, because taking off and fixing a denture is easy by this method, as is shown in laid-open Japanese patent 7-136190 and American patent 4, 508, 507.

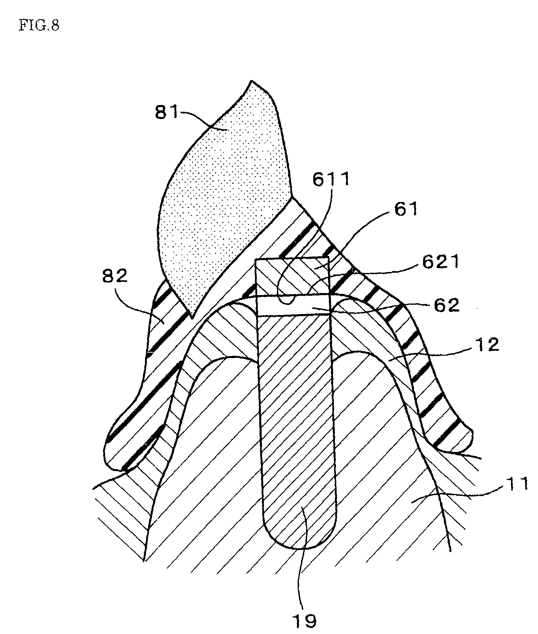

The attachment shown in said laid-open Japanese patent 7-136190, as shown in FIG. 8, consists of a magnetic assembly 61 embedded in denture base 82 and a keeper 62 fixed in an artificial tooth root 19 embedded in jawbone 11. And the attractive surface 611 of the magnetic assembly 61 and the attractive surface 621 of the keeper 62 are fixed by magnetic attractive force.

But this dental attachment does not allow a denture to swing or rotate during occlusion, because the attractive surface 611 of said magnetic assembly 61 and the attractive surface 621 of the keeper 62 are flat.

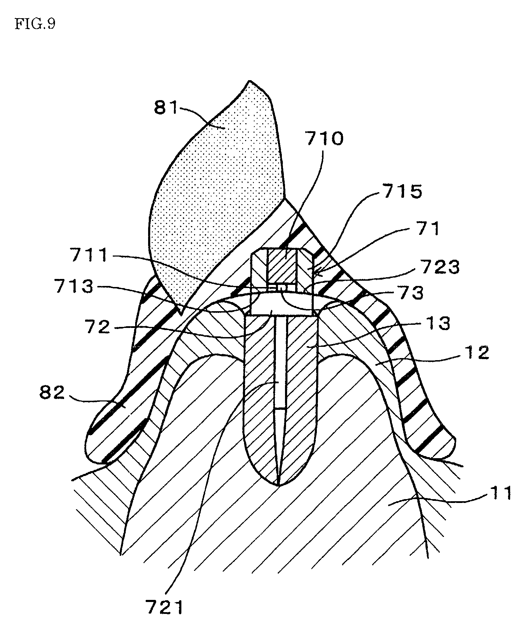

However, the contact surface 713 of the magnetic assembly 71 and attractive surface 723 of the keeper 72 are curved surfaces in the attachment of American patent 4,508,507, shown FIG. 9.

Even in this case, however, the movement of the denture during occlusion causes the magnetic assembly 71 to slip from the keeper 72 and make a gap between the magnetic assembly 71 and the keeper 72. Accordingly, a convex part 73 is made on the top of the keeper 72 to prevent the occurrence of the gap. In turn, the forming process of the convex 73 of the top of the keeper as well as the concave part 711 of the magnetic assembly into which said convex part 73 is inserted, becomes complex and increases the cost of production.

Furthermore, it is difficult to seal the magnet in said dental attachment because of the complex shape of the bottom surface of magnetic assembly 71 that allows it to slide on convex part 73 of the keeper as is mentioned above. So, in fact, the magnet is not sealed and the surface of the magnet is exposed in the oral space. Therefore, magnet 710 always in contact with saliva in the oral cavity and there exists a problem that the magnet is easy to corrode.

And, the magnetic assembly 71, of which the attachment is comprised, has a sandwich-like structure in which magnet 710 is sandwiched between a pair of yokes 715, so the height of the magnet assembly 71 itself is high. Therefore the distance between tooth part 81 and magnet assembly 71 is short. So, the thickness of the denture base has to be made thin, which may weaken the strength of the denture.

Furthermore, the contact surfaces of the magnetic assembly 71 and the keeper 72, the magnet 710 of the magnetic assembly 71, and said convex part 73 are easily worn down.

### SUMMARY OF THE INVENTION

Considering these difficulties, the present invention provides a strong dental attachment with excellent anticorrosive characteristics, which enables moderately swinging or rotation motion, and does not result in a gap between the magnetic assembly and the keeper.

The invention of claim 1 comprises:
A fixing abutment embedded in a jawbone,
A keeper made of magnetic material and supported by said fixing abutment that has a curved attractive surface,
A denture that has a magnetic assembly, which attracts said keeper by magnetic attractive force, and a denture base, into which artificial teeth have been placed.

Said magnetic assembly comprises:
A magnet that has a north and south poles arranged on the top and bottom, or visa versa, of the magnet with respect to tooth length,
The first yoke, which has a concave part that houses said magnet,
The second yoke, which is located at the opening in said first yoke, seals said magnet and faces said keeper,
And a non-magnetic material, which is between said first yoke and said second yoke.

Furthermore, said magnetic assembly comprising said first yoke, second yoke, and non-magnetic material and has a curved attractive surface to fit said keeper.

In the present invention, a fixing abutment is a root cap embedded in natural tooth root implanted in a jawbone or an artificial tooth root implanted in a jawbone.

In the present invention, the dental attachment uses magnetic attractive force to fix the denture on the keeper, resulting in a denture that is easy to put in and take out. That is, different from said prior attachment, putting the denture into the correct location in the oral cavity becomes easy and it is possible to put in or take out the denture with a single touch.

And the magnetic assembly comprising the presently invented dental attachment has a concave curved attractive surface that has shape symmetry with the convex curved attracted surface of the keeper. Therefore, the magnetic assembly attracts the keeper well and also allows for rotation movement. Therefore, the denture can swing and rotate in relation to the keeper during occlusion without bringing about a gap between the magnetic assembly and the keeper.

Furthermore, the magnetic assembly in the present invention has what is called a cap-shaped structure, in which the first yoke and the second yoke cover the magnet. In this way a flat-layered structure, with the second yoke, magnet, and denture base lain parallel to the direction of occlusion, can be achieved decreasing the height of the magnetic assembly.

Therefore, compared with the prior sandwich-like structure of magnetic assembly (c.f. said American patent), a thicker denture base is ensured and the strength of the denture base can be improved.

Also, although the magnet itself can relatively easily corrode in the oral cavity, because the yoke covers the entire circumference of the magnet, the magnet has superior anticorrosive characteristics. Because the non-magnetic material part is arranged between the first yoke and the second yoke, the first yoke and the second yoke are magnetically insulated. Therefore all of the generated lines of magnetic force the keeper between the first yoke and the second yoke, and there is no magnetic short circuit.

Therefore, a stronger magnetic attractive force can attract the magnetic assembly and the keeper.

As is mentioned above, the present invention describes a dental attachment, which can swing or rotate moderately without generating a gap between the magnetic assembly and the keeper during occlusion, which is superior in strength, easily adjusts to occlusion in the oral cavity and has superior in corrosion-resistance.

Next, as set forth in claim 2, said fixing abutment can be a root cap embedded in a tooth root.

In this case, fixing abutment can strongly support the keeper in the oral cavity because the root cap is embedded in a natural tooth root implanted naturally in a jawbone. Therefore, a dental attachment that has superior corrosion resistance can be provided. Said fixing abutment is a part used to fix a keeper in a tooth root part.

As is mentioned in claim 3, composite resin is preferable to embed said fixing abutment in a tooth root part.

In this case, as is mentioned above, the fixing abutment can strongly support a keeper because the abutment is embedded and fixed in a natural tooth root. Therefore, a dental attachment that is superior in durability can be provided. Resin such as acrylic resin is used as the said resin.

Next, as the invention in claim 4, said abutment for fixing can be an artificial tooth root. In this case, when natural tooth root is broken, an artificial tooth root can be strongly implanted in jawbone and used as an abutment. Said artificial tooth root is usually called an implant.

Next, as the invention in claim 5, said artificial tooth root has
a keeper-supporting part that has a body, a convex part set in said body on the side facing said denture, and a screw hole made on said convex part into which a male screw of said keeper may be inserted,
and a ring made of non-magnetic material to fit said convex curved part.

In the case of setting said keeper in said artificial tooth root, it is preferable to set said ring on said convex part of said keeper-supporting part first, next screw the male screw of the keeper into said screw hole, thus sandwiching said ring in between said keeper and said keeper-supporting part.

Also, as mentioned above, by using a keeper with a screw, joining to the fixing abutment becomes easy, and by setting said ring between the keeper and the abutment, occlusal force during eating is dispersed to the ring and concentration of occlusal force on the male screw of a keeper can be prevented.

Furthermore, making at least two linear parts on a lateral face of a keeper is preferable. By doing so, a wrench can be used to fit a keeper on a fixing abutment, and it can be fixed to a fixing abutment more strongly without yielding keeper damage. Furthermore, it is preferable for the outer diameter of the keeper to be bigger than that of the ring so that the ring is not liable be an obstruction when using the wrench on the keeper.

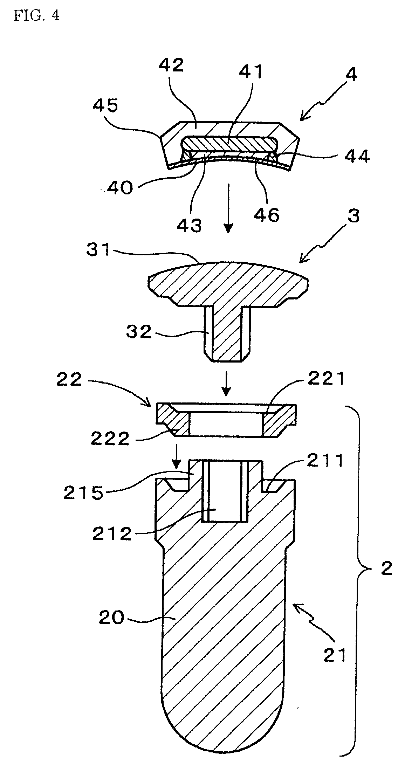

And it is preferable for the ring to have a convex part that fits with the concave part set on the body of the keeper-supporting part, which is around the outside of above-mentioned convex part of the keeper-supporting part. It is also preferable for the ring to have a concave part that fits with the periphery of the underside of the keeper (c.f. FIG.4). These parts' fitting together well enables prevention of the keeper side slipping on the keeper-supporting part.

The ring is made of non-magnetic material and it is especially preferable to use SUS316L, pure Ti, Ti alloy etc. that are biocompatible to a living body.

Next, as the invention in claim 6, it is preferable to give a surface treatment to the attractive surface of said magnetic assembly to improve resistance to wear.

In this case, giving a surface treatment to the attractive surface of the keeper can reduce the wear of the attractive surface of the magnetic assembly caused by repeated fixing, taking off or occlusion, and can give a longer life to the denture attachment.

A usual variety of surface treatment to improve resistance to wear is possible, for example, a coating of TiN, diamond, N, Cr, ceramic, etc. or a surface treatment, such as nitrogen treatment, chrome treatment etc.

Next, as the invention in claim 7, it is preferable for a part of the lateral side of said opening part of said first yoke to be convex or concave.

In this case, the convex or concave part can result in the fixing of a magnetic assembly in the denture base more strongly.

That is to say, although a magnetic assembly is embedded in a denture base made of resin materials etc. by adhesive, separation from the denture base may happen after long use.

In response to this, by making said convex or concave part, the magnetic assembly is fixed in a condition where said convex part protrudes out into the denture base, or where the denture base intrudes into said concave part. So, separation of the magnetic assembly is prevented with more certainty. The shape of the convex or concave part is not restricted and a variety of shapes are possible.

Next, as the invention in claim 8, it is preferable to give a primer coat to the outer surface of said first yoke to improve the union with said denture base.

In this case, giving a primer coat can improve the union between a magnetic assembly and resin materials (synthetic resin) etc. and fix a magnetic assembly in the denture base more strongly, having a similar result as said convex or concave part. A variety of things can be used as a primer, for example, metal-adhesive-type acrylic resin etc.

The dental attachment explained as follows is a suitable embodiment of the present invention.

A dental attachment of the present invention comprises a fixing abutment embedded in a tooth root part, a keeper supported by a fixing abutment and a magnetic assembly that attracts the attractive surface of the keeper.

Said fixing abutment, which is embedded in a tooth root part or an artificial tooth root, supports the keeper. A fixing abutment is made of non-magnetic material; it is especially preferable to use a biocompatible material such as titanium alloy.

Next, the keeper is fixed on the upper part (on the side facing the magnetic assembly) of the fixing abutment, and it makes a magnetic circuit with the magnetic assembly thereby fixing the denture onto the fixing abutment. As a material to make a keeper, a variety of corrosive-resistant magnetic dental materials, which have previously been used in the keeper of dental attachments using magnetic attractive force, can be used. Magnetic materials, with greater than 1.3 T of saturation magnetic flux density and a magnetic permeability ratio greater than 3000, are especially preferred. Such magnetic materials are iron, chrome, molybdenum alloy, and soft-magnetic stainless steels, such as 19Cr-2Mo-0.2Ti steel, 17Cr-2Mo-0.2Ti steel, etc.

The attractive surface of the keeper has a dome-shaped surface, and the attractive surface of the magnetic assembly also has a concave dome-shaped surface to fit the attractive surface of the keeper. The shape of the keeper, except for the attractive surface, is not especially restricted and a polygon shape such as octagon, dodecahedron, etc. or a round shape is possible. Furthermore, it is desirable to make an octagonal, dodecahedral, or a polygonal hole at the center, because these shapes make it easy to remove the keeper with a tool.

The magnetic assembly forms a magnetic circuit and fixes the denture on the fixing abutment.

The type of magnet is not especially restricted, and a variety of magnetic materials, which have previously been used as a magnet for a dental attachment using magnetic attractive force, can be used. It is especially desirable to use a magnet that has a high energy product. To give a concrete figure, it is desirable in practice to use a magnetic material that has an energy product greater than 2388kJ/m. Such magnetic materials are Nd-Fe-B type or Sm-Co type rare-earth magnets, etc.

The first yoke of the magnetic assembly has a magnet in its concave part. And the second yoke seals the magnet in the first yoke opposite the keeper face. The material of the first yoke and the second yoke are not especially restricted and a variety of materials, which have previously been used as the yoke of a dental attachment that uses magnetic attractive force, can be used. Using soft-magnetic material is desirable, and using corrosion-resistant soft-magnetic materials is especially desirable to prevent corrosion of the magnet. Some concrete examples are iron, chrome, molybdenum alloy, 19Cr-2Mo-0.2Ti steel, 17Cr-2Mo-0.2Ti steel, and pure iron.

Around the opening in the first yoke, that is, opposite of the keeper face, the second yoke that faces the keeper and a non-magnetic part that lies between the first and second yokes, make a concave dome-shaped attractive surface to fit the dome-shaped attractive surface of the keeper, so, as mentioned above, the dental attachment of the present invention has a rotating function and can cope with the swinging movement of a denture during occlusion.

A non-magnetic part exists between the first yoke and the second yoke, so the first yoke and the second yoke are insulated magnetically. This non-magnetic part can be made by adding Ni etc. between the first yoke and the second yoke and changing it into non-magnetic material using a laser, electric beam etc.

### BREIF DESCRIPTION OF THE DRAWINGS

### BRIEF DESCRIPTION OF THE DRAWINGS

FIG. 1 is an expansion view of the dental attachment of the first embodiment.
FIG. 2 is a diagram of the dental attachment of the first embodiment in an attached state.
FIG. 3 is a diagram of the magnetic assembly of the magnetic attachment of the first embodiment.
FIG. 4 is an expanded sectional view of the dental attachment of the second embodiment.
FIG. 5 is a diagram of the dental attachment of the second embodiment in an attached state.
FIG. 6 is a sectional view of the dental attachment of the second embodiment in which the magnetic assembly is given a primer coat.
FIG. 7 is (A) a sectional view of an artificial tooth root and a keeper, (B) a plane figure of a keeper of the third embodiment.
FIG.8 is a lateral sectional view of a prior example of a dental attachment.
FIG.9 is a lateral sectional view of another prior example of a dental attachment.

### EXPLANATION OF THE MARKS

1 is a dental attachment,
11 is a jawbone,
13 is a tooth root,
2 is an artificial tooth root,
21 is a keeper-supporting part,
22 is a ring,
3 is a keeper,
31 is an attractive surface,
4 is a magnetic assembly,
41 is a magnet,
42 is the first yoke,
43 is the second yoke,
44 is a non-magnetic material part,
47 is a primer coat,
5 is a keeper,
55 is a root cap,
81 is a tooth part.

### DETAILED DESCRIPTION OF THE PREFERRED EMBODIMENT

### EMBODIMENT 1

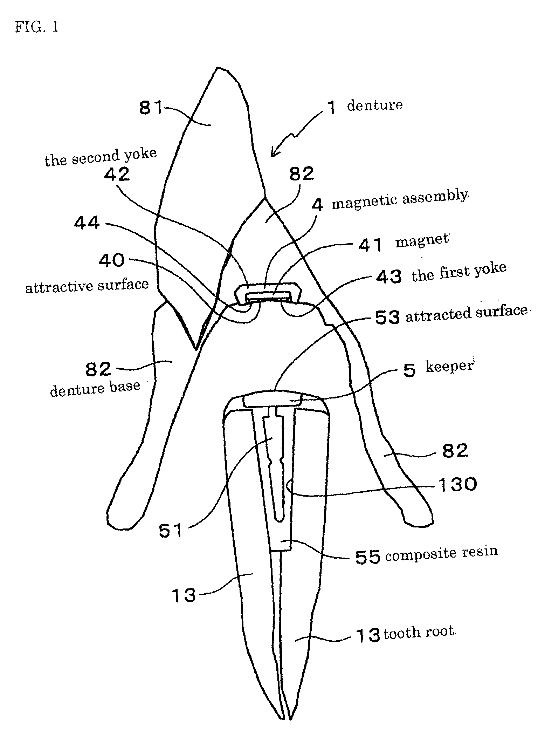

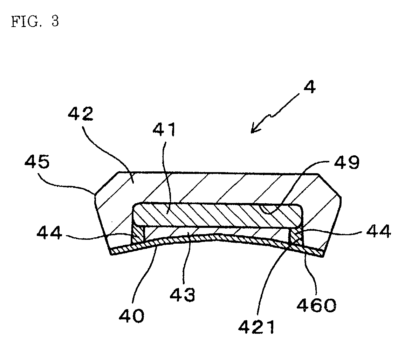

The embodiment example of the present invention, a dental attachment is explained by using FIGS 1~3.

The dental attachment of the present invention, as shown in FIGS 1~ 3, comprises a root cap 55 as a fixing abutment embedded in jawbone 11, a keeper 5 made of magnetic material that has a dome-shaped attractive surface 53 supported by said fixing abutment, a magnetic assembly 4 to attract said keeper 5 by magnetic attractive force, and a denture 1 which teeth parts 81 embedded in a denture base 82.

And, said magnetic assembly 4 comprises a magnet 41 that has north and south poles arranged on the top and bottom, or visa versa, of the magnet with respect to the direction of tooth length, the first yoke 42 that has a concave part 49 holding said magnet 41, the second yoke 43 that seals said magnet 41 and faces said keeper 5, a non-magnetic material part 44 that is between said first yoke 42 and said second yoke 43.

Said magnetic assembly 4 comprises said first yoke 42, the second yoke 43 and aa non-magnetic part 44. And the attractive surface 40 that faces said keeper 5 has a concave dome-shaped surface to fit the attractive surface 53 of said keeper.

And as mentioned above, said fixing abutment is made of composite resin 55 that is embedded and fixed in tooth root 13.

And attractive surface 40 of said magnetic assembly 4 is given a coating 460 made of Al₂O₃ as a surface treatment to improve a resistance to wear.

And a part of the lateral surface of said opening part 421 of said first yoke 42 has a convex part 45.

And in the present example, said composite resin 55 fixing abutment is made by drilling a deep hole 130 in a natural tooth root 13 in a jawbone 11, pouring in composite resin and hardening it. When pouring in the composite resin, the root part 51 of keeper 5 is inserted in said deep hole 130. By this, a keeper 5 is strongly fixed in a tooth root 13 by its root part 51 and composite resin.

A keeper 5 fixed in this way is covered by denture 1 from above, and the concave dome-shaped attractive surface 40 of magnetic assembly 4 set in denture 1 strongly attracts a convex dome-shaped attractive surface 53 of keeper 5 by magnetic attractive force.

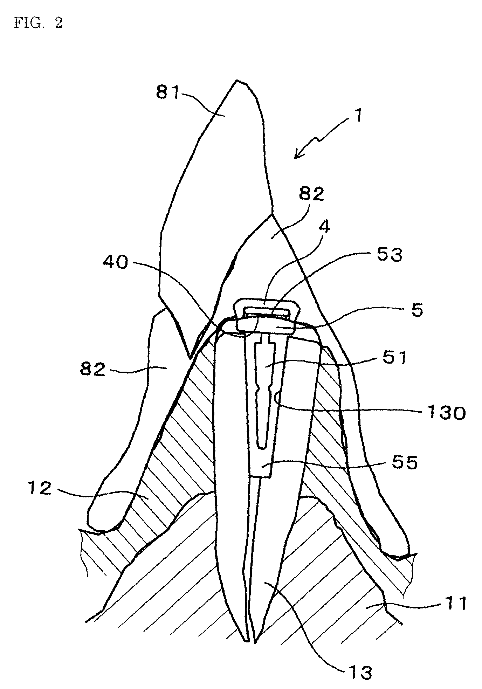

Said denture 1 comprises, as shown in FIGS 1 and 2, a denture base 82 that covers the gingiva 12 on the jawbone 11, said magnetic assembly 4 that is fixed inside of the denture base 82 and the teeth 81 that are fixed on the upper part of the denture base 82.

A concrete example of a magnetic assembly and other parts are shown as follows.

Said magnetic assembly 4 has an outer diameter of 4.4 mm, a height of 1.5 mm, and its attractive surface40 has a diameter of 4 mm. Magnetic assembly 4 is made of Nd type rare earth magnet. The first yoke 42 and the second yoke 43 are made of 19Cr-2Mo-0.2Ti magnetic stainless steel. The present dental attachment has 8N of magnetic attractive force.

The keeper 5 has a diameter of 4.0 mm, a thickness of 0.8 mm, and is made of 19Cr-2Mo-0.2Ti material. The outer lateral shape of the attractive surface 53 is a dodecahedron. The root part 51 of the keeper 5 is 1.2 mm in maximum diameter, 7 mm in total length and has a concave part halfway up the outer lateral surface to improve conjugation with root cap 55. The root part 51 made of SUS316L stainless steel is laser-welded with the keeper 5. The attractive surface 53 of the keeper 5 has a radius of curvature of 6 mm.

In the present example, since denture 1 is fixed to keeper 5 using a magnetic attract force, the dental attachment is easy to fix or take off from denture 1. That is, different from said prior attachments, care in positioning in the oral cavity is unnecessary and taking off or fixing is possible with the slightest touch.

Since the attractive surface 40 of magnetic assembly 4 is a concave dome shape to fit dome-shaped attractive surface 53 of keeper 5, the magnetic assembly 4 attracts keeper 5 very well and has a rotation function.

So, a denture 1 swings or rotates in relation to the keeper without creating a gap between the magnetic assembly and the keeper and can swing or rotate during occlusion.

Furthermore, a magnetic assembly 4 has what is called a cap-shaped structure where the first yoke 42 and the second yoke 43 cover magnet 41. This results in a flat layered structure in which first the second yoke 43, second the magnet 41, and last the denture base 82 are layered in the direction of occlusion, thus making the height of magnetic assembly 4 low.

Therefore, compared with a prior sandwich-shaped structure of a magnetic assembly (c.f. said American patent), a thin denture base can be ensured and the strength of the denture base can be improved.

Since the magnetic assembly 4 is completely covered with yokes 42 and 43, magnet 41 is less liable to corrode and has superior anticorrosion characteristics. And since the non-magnetic material part 44 is set between the first yoke 42 and the second yoke 43, the first yoke 42 and the second yoke 43 are insulated magnetically, and they do not short-circuit magnetically.

Therefore, a magnetic assembly 4 and a keeper 5 can be more strongly attracted by magnetic force.

Said composite resin 55 strongly joins a keeper and tooth root part 13.

And, since attractive surface 40 of said magnetic assembly 4 is given a surface treatment to improve resistance to wear, the wear of attractive surface 40 of magnetic assembly 4 caused by repeated putting in, taking off or during occlusion can be substantially reduced, which gives the dental attachment a longer life.

Since the lateral face of said opening of said first yoke 42 has convex part 45, magnetic assembly 4 can be fixed in denture base 82 more firmly.

That is, magnetic assembly 4 is fixed in the condition where convex part 45 protrudes into the resin material of denture base 82. Therefore, the separation of the magnetic assembly 4 can be prevented with greater certainty.

As is mentioned above, according to this example, a superiorly strong and anticorrosive dental attachment can be provided which does not create a gap between magnetic assembly 4 and keeper 5 during occlusion, which provides denture 1 with moderate swinging or rotation movement and which makes occlusion equilibration easy in the oral cavity.

### EMBODIMENT 2

This example is, as is shown in FIGS 4~6, an example of an implant type, in which an artificial tooth root 2 fixed in jawbone 11 is used as a fixing abutment.

In a dental attachment of the present example, as is shown in FIG. 4, said artificial tooth root 2 has a keeper-supporting part 21, which has a body 20, a convex part 215 on the face of said body 20 which is opposite the denture, and a screw hole 212 set in said convex part into which male screw part 32 of keeper 3 may be inserted, and a ring 22 made of non-magnetic material which fits said screw 212.

And, when setting said keeper 3 into said artificial tooth root 2, first, said ring 22 is set in convex part 215 of said keeper-supporting part 21, next, male screw part 32 of keeper 3 is screwed in said screw hole 212, and said ring 22 is sandwiched between said keeper 3 and said keeper-supporting part 21.
The details of this are explained as follows.

As is shown in FIG. 4, keeper-supporting part 21 has a convex part 215 on the upper part of body 20, and a concave part 211 around the outside of said convex part 215 on the upper part of body 20. And, convex part 215 has a screw hole 212 in the direction of the axis of keeper-supporting part 21.

A ring 22 has a convex part 222, which fits to concave part 211 on the upper part of keeper-supporting part 21, and a concave part 221 on the opposite side of convex part 222, which fits into keeper 3.

In the present example, in the center of concave part 211 of keeper-supporting part 21, a convex part 215 exists so that keeper 3 can be fixed to keeper-supporting part 21.

Also, keeper 3 has a male screw part 32 on the side opposite the attractive surface 31, which screws into screw hole 212 of keeper-supporting part 21.

That is, keeper 3 is fixed on keeper-supporting part 21 by male screw part 32. By the existence of ring 22 between keeper 3 and keeper-supporting part 21, the concentration of biting strength on male screw 32 can be prevented.

And, since ring 22 has a convex part 222 that fits into keeper 3 and a concave part 221 that fits into keeper-supporting part 21, sideslip of keeper 3 from keeper-supporting part 21 can be prevented.

A magnetic assembly 4 comprises;
a magnet 41 that has north and south poles arranged on the top and bottom, or visa versa, of the magnet with respect to the direction of tooth length,
a concave part 49 that holds a magnet 41,
a first yoke 42 that acts like a case and forms the outer edge of attractive surface 40,
a second yoke 43 that forms an attractive surface 40 by sealing the surface of magnetic assembly 41 opposite to keeper 3,
and a non-magnetic material part 44 that is between the first yoke 42 and the second yoke 43.

By fixing or taking off of the denture is easily managed, because the magnetic assembly 4 can be freely put on and taken off of keeper 3. The attached condition is the same as that of embodiment 1.

And, said attractive surface 40 has a concave dome-shaped surface to fit attractive surface 31 of keeper 3. Therefore, dental attachment 1 has a rotating function and can cope with the swinging motion of a denture during occlusion.

Furthermore, magnetic assembly 4 has convex part 45 on the outer lateral face of the first yoke 42 to prevent its falling our of the denture base, and attractive surface 40 is surface-treated by TiN film 46.

Next, the concrete example of materials and dimension of a dental attachment in the present example will be explained.

A keeper-supporting part 21 is made of Ti, and has a diameter of 4.5 mm and a height of 13 mm. The hollow part of concave part 211 is 3.4 mm in diameter and 0.3 mm in depth. Convex part 215 has a hexagonal shape with a 2.4 mm diameter.

Ring 22 is made of SUS316L and has a diameter of 4.5 mm, height of 1.0 mm. The height of convex part 222 and concave part 221 is 0.3 mm; the diameter of the hollow of the top of the convex part 222 and the concave part 221 is 3.4 mm.

A keeper 3 is made of 19Cr-2Mo-0.2Ti and the outer shape of attractive surface 31 is a dodecahedron and the maximum diameter is 5.0 mm, the thickness is 1.0 mm, and the radius of curvature is 8 mm. The diameter of male screw 32 is 1.4 mm, its pitch is 0.3 mm and the height of convex part 215, which fits ring 22, is 0.7 mm.

The outer diameter of a magnetic assembly 4 is 4.4 mm and the height is 1.3 mm.

A magnet 41 that fabricates a magnetic assembly 4 is made of Nd type rare earth magnet and the first yoke 42 and the second yoke 43 are made of 19Cr-2Mo-0.2Ti. The magnetic attract force is 7 N.

The present example is an example of implanting an artificial tooth root 2 in a jawbone 11, when a natural tooth root is broken. According to this example, an artificial tooth root 2 can be implanted firmly in jawbone 11 as a fixing abutment. Said artificial tooth root is usually called an implant.

Also, according to the present example, as mentioned above, since a keeper 3 is a screw-type keeper, the joint with artificial tooth root 2, which acts as a fixing abutment, becomes easy. Furthermore, by the existence of ring 22 between keeper 3 and keeper-supporting part 21, the biting strength disperses to the ring and can prevent the concentration of the biting strength on male screw part 32 of keeper 3.

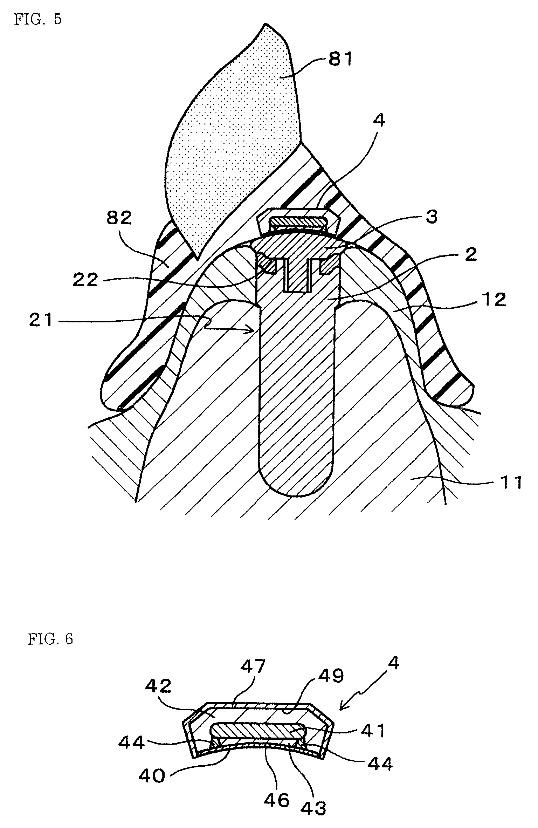

In the present example, as is shown in FIG. 6, the outer lateral face of said first yoke 42 is given a primer coat 47 made of adhesive resin material that improves conjugation with said denture base 82. So, magnetic assembly 4 can be more firmly fixed in denture base 82.

Furthermore, it is preferable for the lateral face of keeper 3 to have at least two linear parts. By having at least two linear parts, a wrench can be used in fixing keeper 3 on keeper-supporting part and it can be fixed more firmly without causing damage to keeper 3. Furthermore, it is preferable to make the peripheral diameter of keeper 3 larger than the diameter of ring 22. In this case, the ring is not liable to be an obstruction when using a wrench on a keeper. In other areas, the same effects as in embodiment example 1 can be seen.

### EMBODIMENT 3

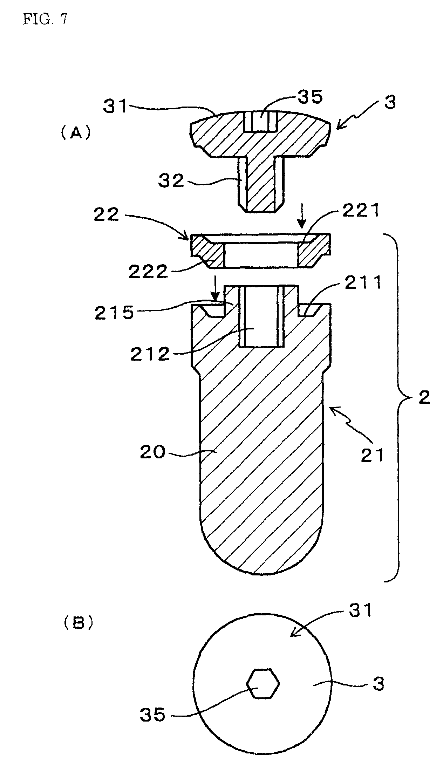

, A concrete example of the structure, materials, and dimension of a dental attachment mentioned in the embodiment 2 is shown in FIG. 7 and explained here.

In said embodiment 2 about the constitution of a dental attachment using an artificial tooth root 2. In this embodiment, the constitution is the same as that of the dental attachment in embodiment 2, except the structure of keeper 3 and the surface treatment of the attractive surface of magnetic assembly 4 where diamond is used instead of Ti.
That is, a keeper-supporting part 21 is made of Ti, with a diameter of 3.5 mm and a height of 10 mm. The diameter of concave part 211 is 2.4 mm and the depth of concave part 211 is 0.2 mm.

Ring 22 is made of Ti and has a diameter of 3.5 mm and a height of 1.0 mm. Convex part 222 and concave part 221 have a height of 0.2 mm, and a diameter of 2.4 mm.

Keeper 3 is made of 17Cr-2Mo-0.2Ti, with a maximum diameter of 3.5 mm, a thickness of 0.8 mm. The radius of curvature of attractive surface 31 is 10 mm.

The center of the upper part of keeper 3 has a hexagonal hole 35. The diameter of said hexagonal hole 35 is 1.0 mm and the depth is 0.9 mm. The diameter of male screw 32 is 1.4 mm, the pitch is 0.3 mm, and the height of the convex part that fits into ring 22 is 0.2 mm.

The outer diameter of said magnetic assembly 4 is 3.4 mm and the height is 1.0 mm. The magnet 4 of magnetic assembly 41 is made of Sm-Co type magnet; first yoke 42 and second yoke 43 are made of 17Cr-2Mo-0.2Ti. Furthermore, the magnetic attractive force in the present denture attachment is 5N.

In this example, the fixing or taking off is done by fitting a hexagonal wrench into said hexagonal hole and rotating keeper 3.

In this example, too, the same effects as in embodiment 2 can be seen.

### EMBODIMENT 4

The ease of fixing or taking off, and the durability are evaluated for each dental attachment of embodiments 1~3.

First the ease of fixing or taking off of a dental attachment of said embodiments 1~3 is mentioned. Since magnetic assembly 4 has said structure, neither precise positioning nor excess pressure is necessary, and the denture can be fixed with a slight touch. The denture can also be taken off without excess force.

Next, the durability is evaluated by the force after repeated removal of a dental attachment and after repeated occlusion. In the case that a dental attachment is removed five times a day, that is, 5000 times repeated removals, an accepted condition for good durability is less than 1 percent deterioration of magnetic attractive force.

Also, in the case that a denture rotates 3 degrees during occlusion for 1000 times a day for 3 years in succession, that is, for about one million repeated times of occlusion, an acceptable condition for good durability is less than 1 µm of abrasion loss of the attractive surface of the magnetic assembly facing the keeper.

The attractive surface of a dental attachment in embodiments 1~3 is surface treated with Al₂O₃, TiN or diamond of thickness 1 µm, so the ground color of the keeper is not exposed. When the abrasion loss of the attractive surface due to occlusion is greater than 1 µm, it is verified because the ground color of the attractive surface becomes exposed.

In said evaluation of dental attachments of said embodiments 1~3, the deterioration of the magnetic attractive force is less than 1 percent even after 10000 removals and the abrasion loss of the attractive surface of the magnetic assembly facing the keeper is less than 1 µm even after two million repetitions of occlusion.

Also, in the dental attachments of embodiments 1~3, even after 20000 removals, the deterioration of the magnetic attractive force is less than 1 percent and even after 3 million repetitions of occlusion, the abrasion loss of the attractive surface of the magnetic assembly facing the keeper is less than 1 µm. Therefore, it is proved that the attachment has superior durability and has a long life. Furthermore, since the attachment of embodiment 3 is surface treated with diamond on the attractive surface, the durability is much superior to that of the attachment of embodiment 2.

According to the present invention, a dental attachment that is superior in strength and anticorrosive characteristics can be provided, wherein a denture can swing or rotate without making a gap between the magnetic assembly and the keeper during occlusion.

It is understood that the embodiment shown in the drawings and described above are merely for illustrative purposes and not intended to limit the scope of the invention, which is defined by the following claims.

## Claims

1. The dental magnetic attachment comprising:
a fixing abutment embedded in a jawbone,
a keeper made of magnetic material, which is supported by said fixing abutment and has a dome-shaped attractive surface,
and a denture, which has a denture base in which artificial teeth are placed and which includes a magnetic assembly that attracts said keeper by magnetic attractive force,
where said magnetic assembly has
a magnet that has north and south poles arranged on the top and bottom, or visa versa, of the magnet with respect to the direction of tooth length,
a first yoke plate, which has said magnet in its convex part,
a second yoke plate which seals said magnet in the opening of said first yoke plate and faces said keeper,
and a non-magnetic material part that is between said first yoke plate and second yolk plate,
where said magnetic assembly the contact surface which faces said keeper is a convex dome-shaped surface which fits the complimentary surface of said keeper.

2. The dental attachment as set forth in claim 1, wherein said fixing abutment is a root cap embedded and fixed in a tooth root.

3. The dental attachment as set forth in claim 1,wherein said fixing abutment is formed of composite resin embedded and fixed in a tooth root.

4. The dental attachment as set forth in claim 1, wherein said fixing abutment is an artificial tooth root fixed in a jawbone.

5. The dental attachment as set forth in claim 4, wherein said artificial tooth root has a body that has a keeper-supporting part, a convex part facing said denture and a screw hole in which to screw a male screw of said keeper,
and a ring made of non-magnetic material which fits said convex part of said body,
where when inserting said keeper in said artificial tooth root, said ring is first set on said convex part of said keeper-supporting part, next a male screw part of a keeper is screwed into said screw hole, pinching said ring between said keeper and said keeper-supporting part.

6. The dental attachment as set forth in one of claims 1~5, wherein the attractive surface of said magnetic assembly is surface-treated to enhance resistance to wear.

7. The dental attachment as set forth in one of claims 1~6, wherein a lateral part of said opening of said first yoke has a convex or concave part.

8. The dental attachment as set forth in one of claims 1~7, wherein the peripheral surface of said first yoke is given primer coat so as to enhance adhesion to the denture base.
